# EUROPEAN PATENT SPECIFICATION

(11) **EP 3 179 326 B1**
(45) Date of publication and mention of the grant of the patent: **10.04.2024**
(21) Application number: 15198785.6
(22) Date of filing: 10.12.2015
(51) Int. Cl.: G05B 23/02

(54) **RAILWAY VEHICLE MAINTENANCE SYSTEM WITH MODULAR RECURRENT NEURAL NETWORKS FOR PERFORMING TIME SERIES PREDICTION**
WARTUNGSSYSTEM FÜR SCHIENENFAHRZEUGE MIT MODULAREN REKURRENTEN NEURONALEN NETZWERKEN ZUR DURCHFÜHRUNG VON EINER ZEITREIHENVORHERSAGE
SYSTÈME DE MAINTENANCE POUR VÉHICULE FERROVIAIRE AVEC DES RÉSEAUX NEURONAUX RÉCURRENTS MODULAIRES EFFECTUANT UNE PRÉDICTION DE SÉRIES TEMPORELLES

(43) Date of publication of application: 14.06.2017
(73) Proprietor: KNORR-BREMSE Systeme für Schienenfahrzeuge GmbH, 80809 München (DE)
(72) Inventor: Komlosi, Istvan, 4225 Debrecen (HU)

(56) References cited:
- WO-A1-01/34446
- ZHIGANG TIAN ET AL: "Health Condition Prediction of Gears Using a Recurrent Neural Network Approach", IEEE TRANSACTIONS ON RELIABILITY, IEEE SERVICE CENTER, PISCATAWAY, NJ, US, vol. 59, no. 4, 21 October 2010 (2010-10-21), pages 700-705, XP011337078, ISSN: 0018-9529, DOI: 10.1109/TR.2010.2083231
- BLEAKIE ALEXANDER ET AL: "Analytical approach to similarity-based prediction of manufacturing system performance", COMPUTERS IN INDUSTRY, ELSEVIER SCIENCE PUBLISHERS. AMSTERDAM, NL, vol. 64, no. 6, 18 April 2013 (2013-04-18) , pages 625-633, XP028554017, ISSN: 0166-3615, DOI: 10.1016/J.COMPIND.2013.02.013
- YU-LIANG DONG ET AL: "Research on the condition based maintenance decision of equipment in power plant", MACHINE LEARNING AND CYBERNETICS, 2004. PROCEEDINGS OF 2004 INTERNATIO NAL CONFERENCE ON SHANGHAI, CHINA AUG. 26-29, 204, PISCATAWAY, NJ, USA,IEEE, PISCATAWAY, NJ, USA, vol. 6, 26 August 2004 (2004-08-26), pages 3468-3473, XP010760110, DOI: 10.1109/ICMLC.2004.1380388 ISBN: 978-0-7803-8403-3
- WOOTTON A J ET AL: "An Echo State Network approach to structural health monitoring", 2015 INTERNATIONAL JOINT CONFERENCE ON NEURAL NETWORKS (IJCNN), IEEE, 12 July 2015 (2015-07-12), pages 1-7, XP033222108, DOI: 10.1109/IJCNN.2015.7280627 [retrieved on 2015-09-28]

## Description

The present invention relates to a maintenance apparatus for providing maintenance information of parts of a rail vehicle by time series prediction, a condition based maintenance system comprising such a maintenance apparatus, a method of providing maintenance information of parts of a rail vehicle by time series prediction and a computer program product for producing the steps of the method.

With condition based maintenance (CBM), an assets condition is measured and required maintenance actions are determined based on the measurement results. The purpose of CBM is to eliminate breakdowns and prolong preventive maintenance intervals. By vibration measurement, oil analysis, measurements of harmful currents/voltages etc., an operation can be stopped and maintenance can be executed before irrevocable damage occurs. Such a maintenance process will lead to a more dynamic maintenance interval. Thereby, it is highly probable that maintenance intervals are prolonged and breakdowns will be eliminated, at least to some extent. A well implemented condition based maintenance system can provide the advantage of up to 20% decrease in stock of spare parts, decreased loss in production, decreased loss in quality flaws etc.

An automated CBM system can lead to decreased life cycle costs (LCC), increased availability and decreased operations and maintenance costs, and should fulfil the criteria of real time applications, high reliability, early-stage alerts where faults are impending, classifications of alerts, and easy understanding of the alerts. A CBM system can be connected to a superior computer and may comprise an automated shut-down process in case of any fault which is dangerous for human beings and equipment. Key variables that have relations to an asset's condition are measured by the CBM system. The levels of these variables levels will give indications to the condition of the asset under maintenance. Examples of measurable variables are vibration (measured by e.g. shock pulse measurement (SPM), envelope technique, g -method, acoustic emission etc.), speed of rotation (measured by e.g. a stroboscope, electrical counters, mechanical sensors etc.), sound (measured by e.g. an electromagnetic microphone, vibration sensor, etc.), temperature (measured by a thermistors or other temperature sensors, color of heat-sensitive paint, etc.), oil compounds (by measuring the compound in the lubrication in e.g. bearings and gears one can see if there exists too much wear or contamination). A completely automated CBM system should be able to diagnose an abnormality and calculate the remaining useful life (RUL).

In the railway industry, due to the increased mechanical stress and elevated frequency of usage, maintenance actions are required more frequently, which leads to increased maintenance effort and costs. A practical way to reduce maintenance costs is to carry out maintenance actions not with fixed periodicity but when given parts of the vehicle need to be repaired or replaced. This requires prediction of the degradation rate of different parts of the vehicle and estimation of their RUL. Therefore, condition based predictive maintenance (CBMP) received great attention in several fields of the transportation industry. The aim of predictive maintenance is first to predict when equipment failure might occur, and secondly, to prevent occurrence of the failure by performing maintenance. Monitoring for future failure allows maintenance to be planned before the failure occurs. Ideally, predictive maintenance allows the maintenance frequency to be as low as possible to prevent unplanned reactive maintenance, without incurring costs associated with doing too much preventative maintenance.

Time series prediction is a useful approach that is capable of approximation future states on a finite horizon based on recorded states in the past. Different methods have been introduced for time series prediction for maintenance applications based on neural networks, fuzzy systems and Hidden Markov Models. The prediction of maintenance costs of construction equipment can be achieved by general regression neural networks. Time series for a maintenance application can be predicted by neuro-fuzzy systems or feed-forward neural networks. The Hidden Markov Models can be used to predict the RUL in industrial maintenance applications.

However, solutions based on Hidden Markov Models and also solutions based on fuzzy systems require a deeper knowledge and a relatively precise mathematical model of the underlying system. In the case of neural networks no rigorous mathematical model is needed but a sufficient amount of data is required to support the neural net's learning process. This approach is more feasible when modelling many correlating effects is cumbersome thus one can rely only on measured data.

ZHIGANG TIAN ET AL: "Health Condition Prediction of Gears Using a Recurrent Neural Network Approach", IEEE TRANSACTIONS ON RELIABILITY, IEEE SERVICE CENTER, PISCATAWAY, NJ, US, vol. 59, no. 4, 21 October 2010 (2010-10-21), pages 700-705, XP011337078, ISSN: 0018-9529, DOI: 10.1109fTR.2010.2083231 discloses that current health condition prediction approaches are not accurate enough, which has become the bottleneck for achieving the full power of CBM. Neural network based methods have been considered to be a very promising category of methods for equipment health condition prediction. It is proposed a neural network prediction model called extended recurrent neural network (ERNN). An ERNN based approach is developed for health condition prediction of gearboxes based on the vibration data collected from a gearbox experimental system. The results demonstrate the capability of the ERNN based approach for producing satisfactory health condition prediction results. A comparative study based on the gearbox experiment data further establishes ERNN as an effective recurrent neural network model for equipment health condition prediction.

BLEAKIE ALEXANDER ET AL: "Analytical approach to similarity-based prediction of manufacturing system performance", COMPUTERS IN INDUSTRY, ELSEVIER SCIENCE PUBLISHERS. AMSTERDAM, NL, vol. 64, no. 6, 18 April 2013 (2013-04-18), pages 625-633, XP028554017, ISSN: 0166-3615, DOI: 10.1016/J.COMPIND.2013.02.013 discloses a method that is capable of predicting system condition by comparing the similarity of the most recent performance signatures with the known degradation patterns available in the historical records. For predicting the Future performance, the similarities of the current performance signatures to each known degradation pattern are utilized in an analytically tractable manner to slant the prediction distributions toward most similar past degradation patterns. The proposed method was applied to prediction of sensor signatures coming from an industrial plasma enhanced chemical vapor deposition (PECVD) tool operating in a major semiconductor manufacturing fab. Results showed that the proposed method significantly improves the long-term time series prediction accuracy in terms of mean squared errors over the traditional autoregressive moving average (ARMA) model and additionally showed comparable mean squared prediction errors to another recently introduced similarity-based algorithm for long-term prediction of non-linear and non-stationary time series. However, the analytical structure of the method proposed in this paper enables computation of the prediction distributions an order of magnitude faster.

It is therefore an object of the present invention to provide a predictive maintenance system capable of predicting future values of a degradation process with relatively high precision.

This object is solved by a apparatus according to claim 1, a system according to claim 3, a method according to claim 4, and a computer program product according to claim 5.

According to the disclosure, the proposed modular predictive maintenance approach with recurrent neural networks can highly contribute to the reduction of maintenance costs. The modular approach allows construction of specific models for certain vehicle parts that are exposed to degradation, so that the degradation process of a given part can be modelled with high accuracy. Moreover, cross effects between the models can be modelled as well.

Each of the specific models relies on the specific recurrent neural networks of Liquid State Machines (LSM) and Echo State Networks (ESM). The universal modelling capabilities and high level prediction capabilities of the LSM and ESN architectures allow prediction of future values of the degradation process with high precision. When these models are connected in the right manner, a relatively large part of the system can be modelled since different parts of the vehicle can be modelled independently with different LSM or ESN.

Conventional solutions based on neural networks do not possess such predictive capabilities that LSM and ESN structures inherently realize. Thus, a higher level of precision in prediction can be gained using these structures.

Furthermore, conventional solutions based on neural networks are not modular but try to model the equipment or industrial process with a single neural structure. By contrast, the proposed modular approach allows modelling of modules in an independent manner, and these modules are connected together. Thus, cross effects can be modelled properly.

It is noted that the above control apparatus may be implemented based on discrete hardware circuitry with discrete hardware components, an integrated chip, or an arrangement of chip modules, or based on a single processing device or chip controlled by a software routine or program stored in a memory, written on a computer readable medium, or downloaded from a network, such as the internet.

Furthermore, it shall be understood that the apparatus of claim 1, the method of claim 4, and the computer program of claim 5 may have similar and/or identical preferred embodiments, in particular, as defined in the dependent claims.

The recurrent neural networks 200-1 to 200-m comprise a Liquid State Machine (LSM), as described for example in W. Maass, T. Natschlaeger, and H. Markram: Real-time computing without stable states: A new framework for neural computation based on perturbations. Neural Computation, 14(11):2531-2560, 2002, or an Echo State Network (ESN), as described for example in H. Jaeger (2001): The "echo state" approach to analysing and training recurrent neural networks. GMD Report 148, German National Research Center for Information Technology, 2001, which were proven to possess extreme capabilities in modelling complex systems and forecasting time series. Their basic operation is the same, the main difference is that LSM uses a biological neuron model while ESN uses a mathematical neuron model. Also there is some difference in their training method. Both LSM and ESN project corresponding values from the input space (i.e. the series of output data 30 obtained from the sensors 100-1 to 100-n) into very high dimension kernel space and then a readout unit maps values from the kernel space to the output. The structure inherently enables to reveal hidden connections between the process elements and to reveal hidden subprocesses within the process itself. This allows prediction of many output signals from relatively few input signals with high precision.

In the embodiment, the recurrent neural network models 200-1 to 200-m rely on LSM and ESN, so that the degradation process of a given part can be modelled with relatively high accuracy. The universal modelling capabilities and high level prediction capabilities of the modular LSM and ESN architectures enable prediction of future values of the degradation process of each vehicle part with high precision. Since the models 200-1 to 200-m are connected together in an appropriate manner, cross effects can be modelled as well.

The controller 20 may be controlled by respective control software to perform individual recurrent neural network processes of each of the models 200-1 to 200-m.

To summarize, a method and apparatus for providing maintenance of a rail vehicle by time series prediction have been described, wherein at least two recurrent neural network models which correspond to predetermined parts of the rail vehicle, that are exposed to degradation, are constructed, wherein the models are used for time series prediction of sensor output information which relates to a corresponding part of the rail vehicle within a condition based maintenance system of the rail vehicle, and wherein a maintenance output is generated for each of the predetermined parts based on the time series prediction.

It is noted that present invention is not restricted to the above preferred embodiments and can be implemented in any rail vehicle, while any known approach for measuring adhesion at the wheel-rail interface can be used.

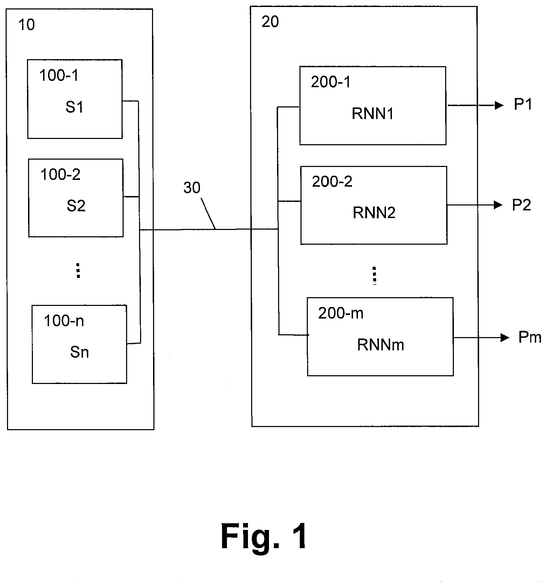

## Claims

1. An maintenance apparatus for providing maintenance information of parts of a rail vehicle (10) by time series prediction,
**characterized in that**
said maintenance apparatus (20) being adapted
to construct at least two independent recurrent neural network models (200-1 to 200-m) which are configured to provide time series prediction for predetermined parts of the rail vehicle (10), respectively, that are exposed to degradation,
to use each of said models (200-1 to 200-m) for time series prediction with an input of sensor output information which relates to a corresponding part of said rail vehicle (10) within a condition based maintenance system of said rail vehicle (10) as an input, and
to generate a prediction information (P1 to Pm) for each of the predetermined parts based on said time series prediction as an output, wherein
the at least two independent recurrent neural network models (200-1 to 200-m) comprise a Liquid State Machine or an Echo State Network, and the at least two independent recurrent neural network models (200-1 to 200-m) are connected together so as to model cross effects between the models, and
the prediction information is a prediction of future values of degradation process.

2. The maintenance apparatus according to claim 1, wherein the prediction information (P1 to Pm) comprises at least one of a degradation rate of the related vehicle part, an estimation of its RUL and, optionally, a type of maintenance action to be performed.

3. A condition based maintenance system for a rail vehicle (10), said system comprising an maintenance apparatus according to any one of claims 1 to 2 and a plurality of sensors (100-1 to 100-n) arranged on said rail vehicle (10) and adapted to measure predetermined degradation-related parameters to provide said sensor output information.

4. A method of providing maintenance information of parts of a rail vehicle (10) by time series prediction, **characterized in that** said method comprising
providing at least two independent recurrent neural network models (200-1 to 200-m) which are configured to provide time series prediction for predetermined parts of the rail vehicle (10), respectively, that are exposed to degradation,
using each of said models (200-1 to 200-m) for time series prediction of sensor output information as an input which relates to a corresponding part of said rail vehicle (10) within a condition based maintenance system of said rail vehicle (10), and
generating a prediction information (P1 to Pm) for each of the predetermined parts based on said time series prediction, wherein
the at least two independent recurrent neural network models (200-1 to 200-m) comprise a Liquid State Machine or an Echo State Network, and
the at least two independent recurrent neural network models (200-1 to 200-m) are connected together so as to model cross effects between the models, and
the prediction information is a prediction of future values of degradation process.

5. A computer program product comprising code means for producing the steps of method claim 4 when run on a computer device.

## Patentansprüche

1. Wartungseinrichtung zum Bereitstellen von Wartungsinformationen für Teile eines Schienenfahrzeugs (10) durch Zeitreihenvorhersage,
**dadurch gekennzeichnet, dass**
die Wartungseinrichtung (20) angepasst ist,
um mindestens zwei unabhängige rekurrente neuronale Netzwerkmodelle (200-1 bis 200-m) zu konstruieren, die konfiguriert sind, um eine Zeitreihenvorhersage für jeweils vorbestimmte Teile des Schienenfahrzeugs (10), die einer Verschlechterung ausgesetzt sind, bereitzustellen,
um jedes der Modelle (200-1 bis 200-m) für die Zeitreihenvorhersage mit einer Eingabe von Sensorausgangsinformationen, die sich auf einen entsprechenden Teil des Schienenfahrzeugs (10) innerhalb eines zustandsbasierten Wartungssystems des Schienenfahrzeugs beziehen (10), als Eingabe zu verwenden, und
um Vorhersageinformationen (P1 bis Pm) für jeden der vorbestimmten Teile basierend auf der Zeitreihenvorhersage als Ausgabe zu generieren, wobei
die mindestens zwei unabhängigen rekurrenten neuronalen Netzwerkmodelle (200-1 bis 200-m) eine Liquid-State-Machine oder ein Echo-State-Network umfassen, und die mindestens zwei unabhängigen rekurrenten neuronalen Netzwerkmodelle (200-1 bis 200-m) miteinander verbunden sind, um Kreuzeffekte zwischen den Modellen zu modellieren, und
es sich bei den Vorhersageinformationen um eine Vorhersage zukünftiger Werte des Verschlechterungsprozesses handelt.

2. Wartungseinrichtung nach Anspruch 1, wobei die Vorhersageinformationen (P1 bis Pm) mindestens eine Verschlechterungsrate des betreffenden Fahrzeugteils, eine Schätzung seiner RUL und wahlweise eine Art der durchzuführenden Wartungsaktion umfassen.

3. Zustandsbasiertes Wartungssystem für ein Schienenfahrzeug (10), wobei das System eine Wartungseinrichtung nach einem der Ansprüche 1 bis 2 und eine Vielzahl von Sensoren (100-1 bis 100-n) umfasst, die an dem Schienenfahrzeug (10) angeordnet und angepasst sind, um vorbestimmte verschlechterungsbezogene Parameter zu messen, um die Sensorausgangsinformationen bereitzustellen.

4. Verfahren zum Bereitstellen von Wartungsinformationen für Teile eines Schienenfahrzeugs (10) durch Zeitreihenvorhersage, **dadurch gekennzeichnet, dass** das Verfahren Folgendes umfasst:
Bereitstellen von mindestens zwei unabhängigen rekurrenten neuronalen Netzwerkmodellen (200-1 bis 200-m), die konfiguriert sind, um eine Zeitreihenvorhersage für jeweils vorbestimmte Teile des Schienenfahrzeugs (10), die einer Verschlechterung ausgesetzt sind, bereitzustellen,
Verwenden jedes der Modelle (200-1 bis 200-m) zur Zeitreihenvorhersage von Sensorausgangsinformationen als Eingabe, die sich auf einen entsprechenden Teil des Schienenfahrzeugs (10) innerhalb eines zustandsbasierten Wartungssystems des Schienenfahrzeugs (10) beziehen, und
Generieren von Vorhersageinformationen (P1 bis Pm) für jeden der vorbestimmten Teile basierend auf der Zeitreihenvorhersage, wobei
die mindestens zwei unabhängigen rekurrenten neuronalen Netzwerkmodelle (200-1 bis 200-m) eine Liquid-State-Machine oder ein Echo-State-Network umfassen, und
die mindestens zwei unabhängigen rekurrenten neuronalen Netzwerkmodelle (200-1 bis 200-m) miteinander verbunden sind, um Kreuzeffekte zwischen den Modellen zu modellieren, und
es sich bei den Vorhersageinformationen um eine Vorhersage zukünftiger Werte des Verschlechterungsprozesses handelt.

5. Computerprogrammprodukt, das Codemittel zum Erzeugen der Schritte des Verfahrensanspruchs 4, wenn es auf einer Computervorrichtung ausgeführt wird, umfasst.

## Revendications

1. Appareil de maintenance pour fournir des informations de maintenance de pièces d'un véhicule ferroviaire (10) par prédiction de séries temporelles,
**caractérisé en ce que**
ledit appareil de maintenance (20) étant adapté
pour construire au moins deux modèles de réseau neuronal récurrents indépendants (200-1 à 200-m) qui sont configurés pour fournir une prédiction de séries temporelles pour des pièces prédéterminées du véhicule ferroviaire (10), respectivement, qui sont exposées à une dégradation,
pour utiliser chacun desdits modèles (200-1 à 200-m) pour la prédiction de séries temporelles avec une entrée d'informations de sortie de capteur qui se rapportent à une pièce correspondante dudit véhicule ferroviaire (10) dans un système de maintenance basé sur l'état dudit véhicule ferroviaire (10) comme entrée, et
pour générer des informations de prédiction (PI à Pm) pour chacune des pièces prédéterminées sur la base de ladite prédiction de séries temporelles en tant que sortie, dans lequel
les au moins deux modèles de réseau neuronal récurrents indépendants (200-1 à 200-m) comprennent une machine à états liquides ou un réseau à états d'écho, et les au moins deux modèles de réseau neuronal récurrents indépendants (200-1 à 200-m) sont connectés entre eux de manière à modéliser les effets croisés entre les modèles, et
les informations de prédiction sont une prédiction de valeurs futures du processus de dégradation.

2. Appareil de maintenance selon la revendication 1, dans lequel les informations de prédiction (P1 à Pm) comprennent au moins un parmi un taux de dégradation de la pièce de véhicule associée, une estimation de sa RUL et, facultativement, un type d'action de maintenance à effectuer.

3. Système de maintenance basé sur l'état pour un véhicule ferroviaire (10), ledit système comprenant un appareil de maintenance selon l'une quelconque des revendications 1 à 2 et une pluralité de capteurs (100-1 à 100-n) disposés sur ledit véhicule ferroviaire (10) et adaptés pour mesurer des paramètres prédéterminés liés à la dégradation afin de fournir lesdites informations de sortie de capteur.

4. Procédé pour fournir des informations de maintenance de pièces d'un véhicule ferroviaire (10) par prédiction de séries temporelles, **caractérisé en ce que** ledit procédé comprend
la fourniture d'au moins deux modèles de réseau neuronal récurrents indépendants (200-1 à 200-m) qui sont configurés pour fournir une prédiction de séries temporelles pour des pièces prédéterminées du véhicule ferroviaire (10), respectivement, qui sont exposées à une dégradation,
l'utilisation de chacun desdits modèles (200-1 à 200-m) pour la prédiction de séries temporelles d'informations de sortie de capteur comme entrée qui se rapportent à une pièce correspondante dudit véhicule ferroviaire (10) dans un système de maintenance basé sur l'état dudit véhicule ferroviaire (10), et
la génération d'informations de prédiction (PI à Pm) pour chacune des pièces prédéterminées sur la base de ladite prédiction de séries temporelles, dans lequel
les au moins deux modèles de réseau neuronal récurrents indépendants (200-1 à 200-m) comprennent une machine à états liquides ou un réseau à états d'écho, et
les au moins deux modèles de réseau neuronal récurrents indépendants (200-1 à 200-m) sont connectés ensemble de manière à modéliser des effets croisés entre les modèles, et
les informations de prédiction sont une prédiction de valeurs futures du processus de dégradation.

5. Produit programme informatique comprenant des moyens de code pour produire les étapes du procédé de la revendication 4 lorsqu'il est exécuté sur un dispositif informatique.
